# EUROPÄISCHE PATENTSCHRIFT

(11) **EP 4 268 562 B1**
(45) Veröffentlichungstag und Bekanntmachung des Hinweises auf die Patenterteilung: **18.06.2025**
(21) Anmeldenummer: 23170474.3
(22) Anmeldetag: 27.04.2023
(51) Int. Cl.: A01B 73/04

(54) **LANDWIRTSCHAFTLICHES ANBAUGERÄT**
AGRICULTURAL IMPLEMENT
APPAREIL AGRICOLE

(30) Priorität: 27.04.2022 DE 102022110260
(43) Veröffentlichungstag der Anmeldung: 01.11.2023
(73) Patentinhaber: SIP Strojna Industrija d.d., 3311 Sempeter v Sav.dol. (SI)
(72) Erfinder: BOGATAJ, Sebastjan, 3303 Gomilsko (SI); JANEZ, Tomeli, 1222 Trojane (SI); MATEJ, Zorko, 3000 Celje (SI); LOPAN, Damjan, 3304 Tabor (SI)
(74) Vertreter: Puschmann Borchert Kaiser Klettner Patentanwälte Partnerschaft mbB

(56) Entgegenhaltungen:
- DE-A1- 3 827 624
- US-A- 4 561 505
- US-A- 4 660 654

## Beschreibung

Die Erfindung betrifft ein landwirtschaftliches Gerät gemäß der im Oberbegriff des Anspruches 1 angegebenen Art.

Landwirtschaftliche Geräte zur Kopplung mit einem Traktor sind regelmäßig so ausgebildet, dass sie einen Zentralrahmen aufweisen, an dem Tragarme, die Arbeitsmittel tragen, schwenkbar befestigt sind. Die Tragarme können eine Arbeits- und eine Transportstellung einnehmen, wobei die Überführung von der einen in die andere Stellung ein Schwenken der Tragarme um eine Schwenkachse beinhaltet.

Ferner weisen bekannte landwirtschaftliche Geräte eine Sicherungseinrichtung auf, durch die die Tragarme in der Transportstellung arretiert werden und insbesondere nicht zurück in die Arbeitsstellung schwenken können. Die Sicherungseinrichtung besitzt entsprechend eine Verriegelungsstellung, die durch ein Schwenken des Tragarms von der Arbeits- in die Transportstellung erreicht wird. Dieser Vorgang wird meist durch eine eingebaute Hydraulik durchgeführt.

Ein Lösen dieser Verriegelungsstellung der Sicherungseinrichtung wird über das Ziehen an einem Zugelement, beispielsweise ein Seil, vorzugsweise per Hand ausgelöst oder kann durch einen Arretier-Zylinder erfolgen. Ein von Hand, über ein betätigtes Zugseil, lösbarer Verriegelungsmechanismus ist in der DE 38 27 624 A1 offenbart.

Dies hat den Nachteil, dass ein Operator das Lösen aus dem Führerhaus gesondert bedienen muss.

Die US 4 561 505 A offenbart einen Maschinenrahmen mit zwei schwenkbaren Tragarmen. Die Transportwinkellage ist dort in einer horizontalen Position, dass die Tragarme auf Aufnahme abgelegt werden können. Zur Arretierung in der Arbeitsstellung sind Haken vorgesehen, die während des Betriebs gelöst werden können, um eine Schwimmstellung zu ermöglichen.

Weiterhin offenbart die US 4,660,654 eine Sicherungseinrichtung eines landwirtschaftlichen Geräts, wobei das Herstellen bzw. Lösen der Verriegelungsstellung in die Bewegung des Tragarms von der Arbeitsstellung in die Transportstellung bzw. von der Transportstellung in die Arbeitsstellung integriert ist. Die Sicherungseinrichtung weist dabei einen um eine Achse beweglichen Haken und einen Bolzen auf, wobei der Haken und der Bolzen in der Verriegelungsstellung so zusammenwirken, dass einem Verschwenken des Tragarms in die Arbeitsstellung entgegengewirkt wird/verhindert wird. Der Haken ist am Zentralrahmen und der Bolzen am Tragarm angeordnet. Der Haken ist in Richtung der Verriegelungsbewegung von Haken und Bolzen mit einer Feder vorgespannt. Der Tragarm und der Zentralrahmen sind über einen Hydraulikzylinder verbunden, wobei ein Ende des Hydraulikzylinders mittelbar über ein zweiseitig bewegliche gelagertes Zwischenteil im Bereich des Bolzens mit dem Tragarm verbunden ist. Durch den Hydraulikzylinder kann der Tragarm von der Transportstellung in die Arbeitsstellung und vice versa verschwenkt werden.

Durch eine Arretierbewegung des Tragarms, also die Bewegung in die Verriegelungsstellung, drückt der Bolzen den Haken entgegen der Federvorspannung auf, wobei dieser dann in der Transportstellung in den Bolzen einhakt.

Durch eine Bewegung des Hydraulikzylinders zum Verschwenken in die Arbeitsstellung aus der Verriegelungsstellung, drückt ein Schiebeelement, das am Zwischenteil fest angeordnet ist, den Haken entgegen der Federvorspannung auf, sodass dieser freigegeben wird und der Tragarm in die Arbeitsstellung verschwenken kann.

Der Erfindung liegt die Aufgabe zugrunde, ein landwirtschaftliches Gerät gemäß der im Oberbegriff des Anspruches 1 angegebenen Art derart weiterzubilden, dass die Handhabung der Sicherungseinrichtung verbessert wird.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

In bekannter Art und Weise weisen landwirtschaftliche Geräte mit einer Koppeleinheit für einen Traktor einen Zentralrahmen und zumindest einen Tragarm, der ein Arbeitsmittel trägt, auf. Der zumindest eine Tragarm ist schwenkbar um eine insbesondere horizontal und in Arbeitsrichtung liegende Schwenkachse am Zentralrahmen angebunden. Das landwirtschaftliche Gerät besitzt eine Arbeits- und eine Transportstellung. Der zumindest eine Tragarm ist in der Arbeitsstellung im Wesentlichen horizontal in einer Arbeitswinkellage ausgerichtet und in der Transportstellung im Wesentlichen vertikal in einer Transportwinkellage ausgerichtet. Zur Sicherung des zumindest einen Tragarms in der Transportstellung während des Transports ist eine Sicherungseinrichtung vorgesehen. Die Sicherungseinrichtung umfasst zwei Formschlusselemente, nämlich wenigstens ein zentralrahmenseitiges Formschlusselement und wenigstens ein, dem zentralrahmenseitigen Formschlusselement zugeordnetes, tragarmseitiges Formschlusselement.

Die Sicherungseinrichtung ist derart gestaltet, dass die zugeordneten Formschlusselemente durch eine relative Schließbewegung in Eingriff miteinander bringbar sind, wenn sich der Tragarm in der Transportwinkellage befindet. Ferner sind die Formschlusselemente durch eine, insbesondere zur relativen Schließbewegung entgegengesetzte, relative Öffnungsbewegung aus dem Eingriff wieder lösbar. So kann der Tragarm nach dem Lösen wieder in die Arbeitsstellung verschwenkt werden.

Die Sicherungseinrichtung ist so ausgebildet, dass die Formschlusselemente die relative Öffnungsbewegung ausführen, indem der Tragarm eine Lösebewegung relativ zum Zentralrahmen ausführt und die Formschlusselemente die relative Schließbewegung ausführen, indem der Tragarm eine Arretierbewegung relativ zum Zentralrahmen ausführt.

Durch die erfindungsgemäße Anordnung der Formschlusselemente wird die relative Öffnungsbewegung der Formschlusselemente mit der Lösebewegung des Tragarms gekoppelt.

Dadurch wird eine automatische Bedienung der Sicherungseinrichtung erreicht, ohne dass ein zusätzlicher Aktor, beispielsweise eine zusätzliche Hydraulik oder ein zusätzlicher Motor, benötigt würde. Zudem kann durch die erfindungsgemäße Ausgestaltung auch auf eine zusätzliche Bedienschnittstelle im Traktor verzichtet werden.

So wird die Bedienung der Sicherungseinrichtung automatisiert und in bestehende, sich durch die Tragarmbedienung ergebende, Bewegungsabläufe integriert, wodurch auch die Bedien-Aktorik, insbesondere Hydraulikzylinder, der Tragarme zur Beeinflussung der Sicherungseinrichtung verwendet werden.

Vorzugsweise weist die Sicherungseinrichtung eine Öffnungseinrichtung auf, die mit dem zentralrahmenseitigen Formschlusselement und / oder tragarmseitigen Formschlusselement verbunden ist.

Die Öffnungseinrichtung wandelt insbesondere die Lösebewegung des Tragarms in eine zu dieser unterschiedlichen relativen Öffnungsbewegung des verbundenen Formschlusselements. Die relative Öffnungsbewegung wird dabei durch die Federkraft der vorgespannten Feder unterstützt, wobei die Öffnungseinrichtung insbesondere eine translatorische Bewegung des Tragarms in eine rotatorische Bewegung des zugeordneten Formschlusselements wandelt. Die Öffnungseinrichtung wandelt die Lösebewegung des Tragarms in eine zu dieser unterschiedlichen relativen Öffnungsbewegung des verbundenen Formschlusselements.

Vorzugsweise umfasst die Öffnungseinrichtung zumindest eine Feder, die das tragrahmenseitige und / oder zentralrahmenseitige Formschlusselement so vorspannt, dass es sich in Richtung der relativen Öffnungsbewegung bewegt. Insbesondere wird die relative Öffnungsbewegung dabei durch die Federkraft der vorgespannten Feder unterstützt, wobei die Öffnungseinrichtung insbesondere eine translatorische Bewegung des Tragarms in eine rotatorische Bewegung des zugeordneten Formschlusselements wandelt.

Kommt es nunmehr zu einem Defekt der Feder, bleibt das Formschlusselement in der verschlossenen Stellung.

Zudem kann dadurch eine einseitige Nutzung der Arretierbewegung des Tragarms realisiert werden, wobei dennoch ein automatisches Lösen ermöglicht ist. So ist keine dauerhafte Kopplung der Sicherungseinrichtung mit dem Tragarm notwendig. So kann mit Entspannung der Feder die relative Öffnungsbewegung ausgeführt werden. Ein einfaches Aufheben der Vorspannung, wodurch die Feder dann in einen entspannteren Zustand überführt wird, reicht damit aus, um die relative Öffnungsbewegung durchzuführen.

Die Feder kann bevorzugt eine Zugfeder sein. Unter einer Feder ist ein Element zu verstehen, das in eine Richtung vorgespannt werden kann. Dies umfasst insbesondere auch Gummi-/Elastomerfedern, Metallfedern oder Ähnliches.

Bevorzugt umfasst die Bewegung des Tragarms von der Transportstellung in die Arbeitsstellung die Lösebewegung und die Bewegung von der Arbeitsstellung in die Transportstellung die Arretierbewegung. Hierdurch wird die Löse- und Arretierbewegung des Tragarms in den bestehenden Prozess des Wechsels zwischen Arbeitsstellung und Transportstellung integriert, so dass keine zusätzlichen Bewegungen des Tragarms zur Lösung und / oder Arretierung durch den Tragarm der Sicherungseinrichtung ausgeführt werden müssen.

Durch eine solche Öffnungseinrichtung kann die relative Öffnungsbewegung der Formschlusselemente, die durch die Lösebewegung des Tragarms initiiert wird, durch eine Bewegung des Tragarms über eine von der Öffnungsbewegung unabhängige Bewegungsrichtung gesteuert werden. Dadurch wird eine Erhöhung der Flexibilität in der Abstimmung der Bewegung des Tragarms und der relativen Öffnungsbewegung erreicht.

Die Öffnungseinrichtung umfasst insbesondere ein Öffnungskoppelelement, das durch die Lösebewegung des Tragarms um einen Öffnungsverfahrweg von einer Ausgangslage in eine Öffnungskoppelelementendlage verschoben wird, um die relative Öffnungsbewegung auszuführen.

Das Öffnungskoppelelement weist bevorzugt ein Anschlagselement auf, das mit einer Anschlagsfläche des Tragarms zusammenwirkt. Hierdurch wird auf einfache Weise eine Kraftübertragung und / oder eine Bewegungsübertragung des Tragarms über die Anschlagsfläche auf das Anschlagselement auf das Öffnungskoppelelement realisiert.

Bevorzugt umfasst die Sicherungseinrichtung eine mit dem zentralrahmenseitigen Formschlusselement und / oder dem tragarmseitigen Formschlusselement verbundene Arretiereinrichtung, die die Arretierbewegung des Tragarms in eine zu dieser unterschiedlichen relativen Schließbewegung des verbundenen Formschlusselements wandelt.

Durch die Arretiereinrichtung kann die relative Schließbewegung der Formschlusselemente durch die Arretierbewegung des Tragarms initiiert werden. Dadurch wird eine Erhöhung der Flexibilität in der Abstimmung der Bewegung des Tragarms und der relativen Schließbewgung erreicht.

Die Arretiereinrichtung umfasst bevorzugt ein Arretierkoppelelement, das durch die Arretierbewegung des Tragarms um einen Arretierverfahrweg in eine Arretierkoppelelementendlage verschoben wird. Das Arretierkoppelelement weist insbesondere ein Anschlagselement auf, das mit einer Anschlagsfläche des Tragarms zusammenwirkt. Hierdurch wird auf einfache Weise eine Kraftübertragung und / oder eine Bewegungsübertragung des Tragarms über die Anschlagsfläche auf das Anschlagselement auf das Arretierkoppelelement realisiert.

Vorzugsweise werden das Öffnungskoppelelement und das Arretierkoppelelement baueinheitlich durch dasselbe Koppelelement oder dieselben Koppelelemente umfassend gebildet. Der Öffnungsverfahrweg entspricht dem Arretierverfahrweg. Durch das baueinheitliche Koppelelement können Bauteile, die für Öffnungskoppelelement und Arretierkoppelelement benötigt werden würden, eingespart werden. Dies führt insbesondere zu einer Aufwands- und Kostenersparnis bei der Produktion.

Gemäß einer weiteren vorteilhaften Ausbildungsform der Erfindung weist die Sicherungseinrichtung eine Öffnungseinrichtung auf, die mit dem zentralrahmenseitigen Formschlusselement verbunden ist. Die Öffnungseinrichtung umfasst eine Feder, die das Formschlusselement in Richtung der relativen Öffnungsbewegung vorspannt. Die Arretiereinrichtung ist mit dem zentralrahmenseitigen Formschlusselement verbunden und die Arretiereinrichtung umfasst ein Arretierkoppelelement, das durch die Arretierbewegung des Tragarms verschoben wird und somit mit dem Formschlusselement so verbunden ist, dass mit der Arretierbewegung das Formschlusselement die relative Schließbewegung entgegen der Federvorspannung ausführt. Der Tragarm wirkt derart auf das Formschlusselement ein, dass nach Überführung in die Koppelendlage die Formschlusselemente unter Federvorspannung des tragrahmenseitigen Formschlusselements eingreifen. Mit der Öffnungsbewegung wird das Formschlusselement nicht mehr in Schließrichtung mit einer Kraft beaufschlagt, wodurch das tragrahmenseitige Formschlusselement unter der Federspannung die relative Öffnungsbewegung ausführt, soweit es die Lage des Tragarms zulässt. Nach Verfahren des Tragarms über den Öffnungsverfahrweg ist der Eingriff zwischen zentralrahmenseitigem und tragarmseitigem Formschlusselement gelöst, so dass der Tragarm aus der Transportstellung in die Arbeitsstellung geschwenkt werden kann.

So können die Öffnungseinrichtung und die Arretiereinrichtung auf einfache Weise miteinander gekoppelt werden und Bauelemente umfassen, die sowohl dem Öffnen als auch dem Schließen dienen.

Bevorzugt sind das zentralrahmenseitige Formschlusselement als ein schwenkbar gelagerter Haken, insbesondere Doppelhaken, und das tragarmseitige Formschlusselement als korrespondierend zum Haken ausgebildetes zylindrisches Element, insbesondere als ein zylindrischer Bolzen oder ein hohlzylindrisches Rohr, das bevorzugt an das Tragarmprofil angeschweißt ist, ausgebildet. Hierdurch wird eine einfache und zuverlässige Sicherungseinrichtung gebildet.

Vorzugsweise ist zumindest die Lösebewegung des Tragarms eine translatorische Bewegung. Dadurch wird eine Entkopplung der Lösebewegung von der Schwenkbewegung des Tragarms zur Überführung zwischen Transportstellung und Arbeitsstellung vereinfacht.

Gemäß einer weiteren vorteilhaften Ausbildungsform der Erfindung sind die Lösebewegung und die Arretierbewegung jeweils translatorische Bewegungen. Dadurch wird eine Entkopplung der Lösebewegung und der Arretierbewegung von der Schwenkbewegung des Tragarms zur Überführung zwischen Transportstellung und Arbeitsstellung für beide Fälle vereinfacht.

Bevorzugt wirken die Lösebewegung und die Arretierbewegung in entgegengesetzte Bewegungsrichtungen. Durch das entgegengesetzte Wirken der Arretierbewegung und der Lösebewegung muss weniger Bewegungsraum für den Tragarm berücksichtigt werden, da die Bewegungen im Wesentlichen entlang der gleichen Achse verlaufen.

Erfindungsgemäß ist der Tragarm wenigstens zweiteilig ausgebildet und weist ein erstes Tragarmteil und ein zweites Tragarmteil auf. Das erste Tragarmteil ist schwenkbar mit dem Zentralrahmen verbunden, und das zweite Tragarmteil ist relativ zum ersten Tragarmteil über einen Auszugsweg verschiebbar.

Das zweite Tragarmteil liegt in der Transportstellung in einer Transportendlage gegenüber dem ersten Tragarmteil, und in der Arbeitsstellung in einer Arbeitsendlage gegenüber dem ersten Tragarmteil. Das zweite Tragarmteil ist über einen Auszugsweg von der Transportendlage in die Arbeitsendlage verfahrbar. Die Gesamtlänge des Tragarms in der Transportendlage ist geringer als in der Arbeitsendlage. Hierdurch kann der Tragarm, also der Abstand zwischen einem an dem Tragarm angebundenen Arbeitswerkzeug und der Schwenkachse des ersten Tragarmteils, in der Arbeitsstellung länger ausgebildet sein als in der Transportstellung. Die maximal vorgeschriebene Höhe des landwirtschaftlichen Geräts in der Transportstellung kann erfüllt werden und gleichzeitig ist der Tragarm in der Arbeitsstellung verlängerbar.

Die Öffnungs- und / oder Arretierbewegung erfolgt erfindungsgemäß durch die Verschiebung des zweiten Tragarmteils gegenüber dem ersten Tragarmteil.

Durch die translatorische Verschiebung des zweiten Tragarmteils, kann eine, gegenüber der Schwenkbewegung weitere Bewegungsrichtung zur Arretierung des Tragarms in der Transportwinkellage genutzt werden. Dadurch wird eine Entkopplung der Lösebewegung und / oder Arretierbewegung von der Schwenkbewegung des Tragarms zur Überführung zwischen Transportstellung und Arbeitsstellung für beide Fälle vereinfacht

Vorzugsweise umgreift das erste Tragarmteil das zweite Tragarmteil. Hierdurch kann Bauraum für den Tragarm eingespart werden.

Gemäß einer weiteren vorteilhaften Ausführungsform der Erfindung stellt das Verfahren des zweiten Tragarmteils in die Transportendlage die Arretierbewegung dar. In der Transportendlage befinden sich auch die Formschlusselemente in Eingriff. Hierdurch wird die Arretierbewegung mit dem Verfahren des zweiten Tragarmteils in die Transportendlage gekoppelt.

Vorzugsweise stellt das Verschieben des zweiten Tragarmteils von der Transportendlage in Richtung der Arbeitsendlage über einen Öffnungsweg die Öffnungsbewegung dar, so dass nach dem Verschieben des zweiten Tragarmteils über den Öffnungsweg die Formschlusselemente komplett voneinander gelöst sind. Hierdurch ist die Lösebewegung ein Teil der Bewegung, bei der der zweite Tragarmteil in die Arbeitsendlage verschoben wird.

Bevorzugt entspricht die Arretierkoppelelementendlage der Transportendlage. Somit ist sichergestellt, dass die Formschlusselemente eingreifen, wenn sich der Tragarm in der Transportstellung befindet.

Gemäß einer weiteren vorteilhaften Ausführungsform der Erfindung ist in der Transportwinkellage die Anschlagsfläche des Arretierkoppelelements zum ersten Tragarmteil beabstandet, bevorzugt um in etwa den Arretierverfahrweg beabstandet, ausgebildet. Hierdurch wird verhindert, dass lediglich aufgrund einer Schwenkbewegung des Tragarms von der Arbeitsstellung in die Transportstellung der Tragarm auf die Anschlagsfläche des Arretierkoppelelements wirkt. Diese wird dann erst anschließend durch Verfahren des zweiten Tragarmteils betätigt.

Vorzugsweise ist das zweite Tragarmteil als Hohlprofilkörper ausgebildet. Der Hohlprofilkörper ist von einem Zylinder zur Verschiebung der Tragarmteile durchsetzt. Der Zylinder ist einerseits mit dem zweiten Tragarmteil und andererseits mit dem ersten Tragarmteil verbunden. Durch die Ausbildung des zweiten Tragarmteils als Hohlprofilkörper kann der Zylinder, der die Verschiebung der Tragarmteile durch Kraftwirkung durchführt, innerhalb des Hohlprofilkörpers angeordnet werden. Hierdurch wird Bauraum eingespart.

Bevorzugt weist die Sicherungseinrichtung ein Pufferelement auf, das zwischen dem tragarmseitigen Formschlusselement und dem Zentralrahmen angeordnet ist und ein in Richtung des zentralrahmenseitigen Formschlusselements vorgespanntes Gegenlager bildet. Durch das Pufferelement wird das tragarmseitige Formschlusselement in der Transportstellung gegen das zentralrahmenseitige Formschlusselement verspannt, so dass auch eine Vibration des Tragarms um die Schwenkachse reduziert wird.

Gemäß einer weiteren vorteilhaften Ausführungsform der Erfindung weist die Sicherungseinrichtung eine mit dem zentralrahmenseitigen oder tragarmseitigen Formschlusselement verbundene Öffnungseinrichtung auf, die die Lösebewegung des Tragarms in eine zu dieser unterschiedlichen relativen Öffnungsbewegung des verbundenen Formschlusselements wandelt. Die Öffnungseinrichtung umfasst ein Öffnungskoppelelement, das durch die Lösebewegung des Tragarms um einen Öffnungsverfahrweg von einer Ausgangslage in eine Öffnungskoppelelementendlage verschoben wird. Das Öffnungskoppelelement weist ein Anschlagselement auf, das mit einer Anschlagsfläche des Tragarms zusammenwirkt.

Vorzugsweise weist die Sicherungseinrichtung eine mit dem zentralrahmenseitigen oder tragarmseitigen Formschlusselement verbundene Arretiereinrichtung auf, die die Arretierbewegung des Tragarms in eine zu dieser unterschiedlichen relativen Schließbewegung des verbundenen Formschlusselements wandelt. Die Arretiereinrichtung umfasst ein Arretierkoppelelement, das durch die Arretierbewegung des Tragarms um einen Arretierverfahrweg verschoben wird, und insbesondere ein Anschlagselement für den Tragarm aufweist. Der Tragarm weist eine Anschlagsfläche auf. Das Arretierkoppelelement weist ein Justierelement zur Anpassung des Arretierverfahrwegs auf die Transportendlage auf.

Bevorzugt ist das zentralarmseitige Formschlusselement mit dem Zentralrahmen und / oder das tragarmseitige Formschlusselement mit dem Tragarm starr verbunden. Durch die starre Verbindung eines und / oder beider Formschlusselemente kann die relative Öffnungsbewegung und / oder die relative Schließbewegung auf einfache Weise umgesetzt werden.

Gemäß einer weiteren vorteilhaften Ausführungsform der Erfindung weist das landwirtschaftliche Gerät zwei zueinander symmetrische Tragarme auf, die insbesondere um horizontal liegende Schwenkachsen geschwenkt werden können.

Durch die Ausbildung zweier zueinander symmetrischer Tragarme, die beidseitig des Zentralrahmens in einer sogenannten Schmetterlingsanordnung gegenüberliegend angeordnet sind, lassen sich größere Flächen mit den Arbeitsmitteln in der Arbeitsstellung bearbeiten.

Gerade in diese Ausführung ist die erfindungsgemäße landwirtschaftliche Maschine mit der vorgeschlagenen Sicherungseinrichtung bevorzugt umgesetzt, da die Tragarme aufgrund ihrer gegenüberliegenden Anordnung oft nicht so um ihre im Wesentlichen horizontal liegenden Schwenkachsen verschwenkbar sind, dass ihr Schwerpunkt über dem Zentralrahmen zu liegen kommt und sie daher dort nicht abgelegt werden können, wodurch die Wichtigkeit der Sicherung der Tragarme während des Transports erhöht ist.

Weitere Vorteile, Merkmale und Einsatzmöglichkeiten der vorliegenden Erfindung können der nachfolgenden Beschreibung in Verbindung mit den in den Zeichnungen dargestellten Ausführungsformen entnommen werden.

In der gesamten Beschreibung, den Ansprüchen und den Zeichnungen werden diese Begriffe und die zugehörigen Bezugszeichen verwendet, wie sie aus der beigefügten Liste der Bezugszeichen hervorgehen. In den Zeichnungen wird gezeigt:
- Fig. 1: perspektivische Ansicht des erfindungsgemäßen landwirtschaftlichen Geräts;
- Fig. 2: Rückansicht eines mit dem Zentralrahmen verbundenen Tragarms ohne ein Arbeitsmittel, wobei der Tragarm ausgefahren ist;
- Fig. 3: Rückansicht eines mit dem Zentralrahmen verbundenen Tragarms ohne ein Arbeitsmittel, wobei der Tragarm eingefahren ist;
- Fig. 4: perspektivische Ansicht des Zentralrahmens mit einem verbundenen Tragarm, wobei das Haltemittel in der Verschlussstellung ist;
- Fig. 5: perspektivische Ansicht des Zentralrahmens mit einem verbundenen Tragarm, wobei das Haltemittel nicht in der Verschlussstellung ist;
- Fig. 6: schematische Schnittansicht des Zentralrahmens mit einem verbundenen Tragarm, wobei das Haltemittel nicht in der Verschlussstellung ist, und
- Fig. 7: schematische Schnittansicht des Zentralrahmens mit einem verbundenen Tragarm, wobei das Haltemittel in der Verschlussstellung ist.

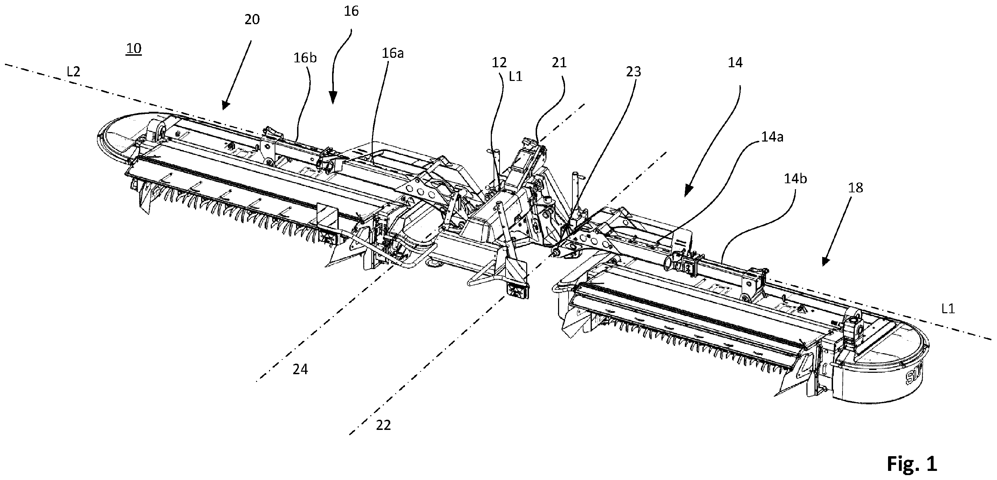

Fig. 1 zeigt ein landwirtschaftliches Gerät 10 in einer Schmetterlingsanordnung, umfassend einen Zentralrahmen 12, der im vorliegenden Fall als Anbaubock ausgebildet ist. Ferner umfasst das landwirtschaftliche Gerät 10 zwei baugleiche Tragarme 14, 16 mit jeweils einem Mähwerkzeug 18, 20 und einer Kupplung 21 zur Kopplung mit einem Traktor. Die Tragarme 14, 16 sind jeweils seitlich schwenkbar um eine im Wesentlichen horizontale Schwenkachse 22, 24 mit dem Zentralrahmen 12 über jeweils ein Schwenklager 23, 25 verbunden.

Die Tragarme 14, 16 umfassen jeweils ein erstes Tragarmteil 14a, 16a und ein zweites Tragarmteil 14b, 16b. Das erste Tragarmteil 14a, 16a umgreift das zweite Tragarmteil 14b, 16b und ist von einer Transportwinkellage in eine Arbeitswinkellage verschwenkbar am Zentralrahmen 12 angebunden. Das zweite Tragarmteil 14b, 16b ist verschiebbar entlang der Tragarmlängsachse L1, L2 zum ersten Tragarmteil 14a, 16a gelagert. Die Tragarme 14, 16 sind somit jeweils teleskopierbar ausgebildet.

Die Mähwerkzeuge 18, 20 sind jeweils mit dem zugeordneten inneren Tragarmteil 14b, 16b über Verbindungsmittel 18a, 20a verbunden. Die Tragarme 14, 16 sind im Wesentlichen analog zueinander am Zentralrahmen 12 angeordnet und ausgebildet.

Das landwirtschaftliche Gerät 10 befindet sich in Fig. 1 in einer Arbeitsstellung. Die Arbeitsstellung zeichnet sich dadurch aus, dass die Tragarme 14, 16 mit den verbundenen Mähwerkzeugen 18, 20 im Wesentlichen horizontal angeordnet sind und das innere Tragarmteil 14b, 16b, insbesondere maximal, bis zu einer Arbeitsendlage ausgeschoben ist.

Die Tragarmlängsachse L1, L2 und die Vertikale bilden einen im Wesentlichen rechten Winkel, nämlich die Arbeitswinkelstellung. Der tatsächliche Arbeitswinkel kann im Betrieb um die Arbeitswinkelstellung schwanken.

In der Transportstellung liegen die Tragarme 14, 16 im Wesentlichen vertikal und das innere Tragarmteil 14b, 16b ist bis zu einer Transportendlage nach innen verschoben. Die Tragarmlängsachse L1, L2 und die Vertikale liegen in der Transportwinkelstellung parallel zueinander oder schließen einen sehr spitzen Winkel ein.

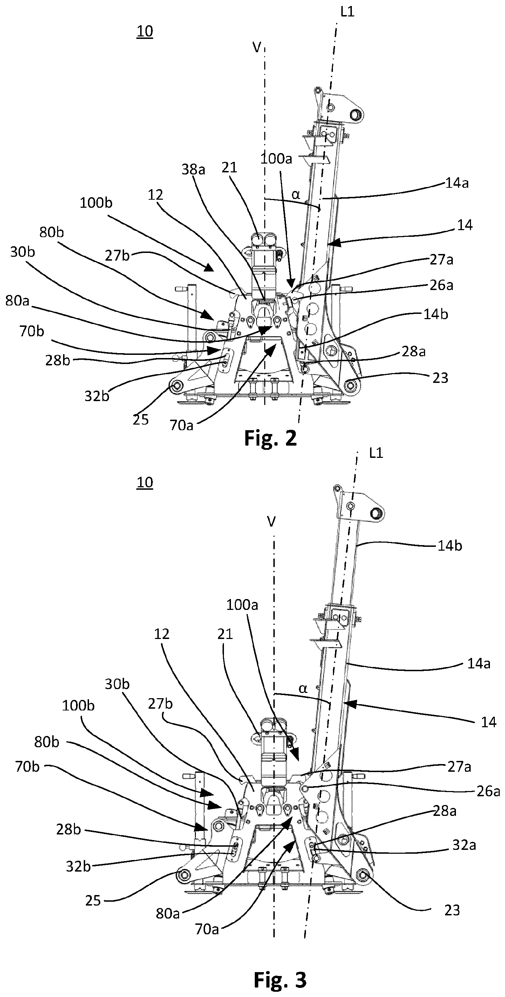

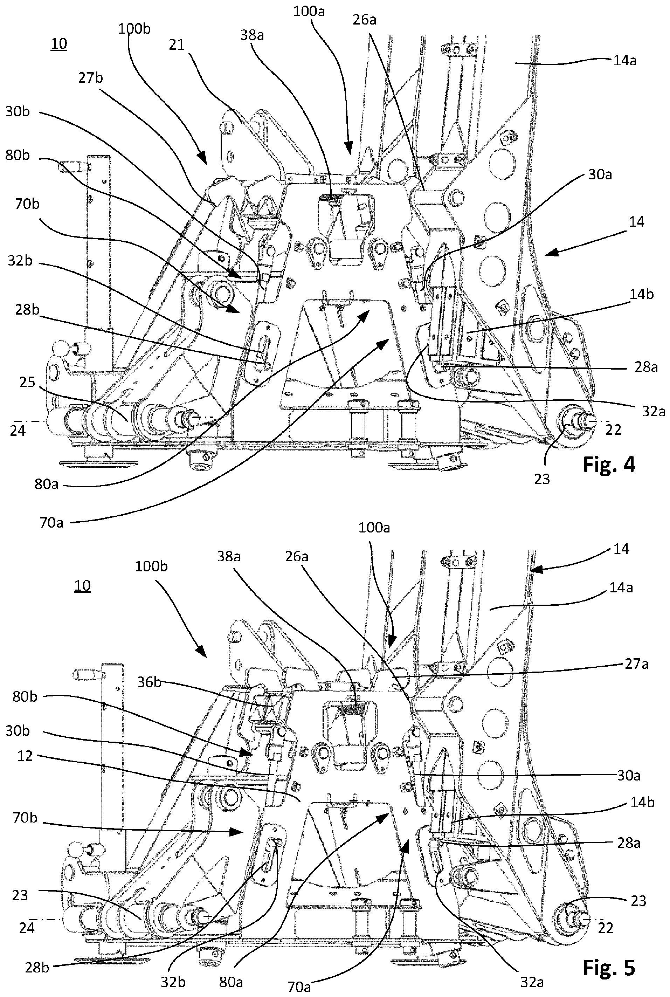

In Fig. 2 ist ausschnittsweise eine Rückansicht des Zentralrahmens 12, der mit einem ersten Tragarm 14 verbunden ist, dargestellt. Der nicht dargestellte zweite Tragarm 16 ist analog zum ersten Tragarm ausgebildet. Der Tragarm 14 befindet sich in der Transportposition. Der erste Tragarm 14 ist im Wesentlichen vertikal ausgerichtet. Die Tragarmlängsachse L1 und die Vertikalachse V bilden die Transportwinkelstellung mit einem Transportwinkel a. Das zweite Tragarmteil 14b des ersten Tragarms 14 ist bis zu seiner Transportendlage gegenüber dem ersten Tragarmteil 14a eingefahren. Das dem Zentralrahmen 12 zugewandte Ende des zweiten Tragarmteils 14b überragt dabei das erste Tragarmteil 14a in Tragarmlängsrichtung L1. Das zweite Tragarmteil 14b verschiebt ein Verschiebelement 28 in seine Endlage und hält es dort fest, so dass sich die Formschlusselemente 26a, 27a in Eingriff befinden. Die genaue Funktion der erfindungsgemäßen Sicherungseinrichtungen 100a, 100b ist in den Fig. 4 und 5 näher beschrieben.

Fig. 3 zeigt den Zentralrahmen 12 mit einem ersten Tragarm 14 in einer Zwischenstellung während des Überführens von der Transportstellung in die Arbeitsstellung. In der dargestellten Stellung befindet sich der Tragarm 14 in der Transportwinkelstellung. Das zweite Tragarmteil 14b des ersten Tragarms 14 ist entlang der Tragarmlängsachse in Richtung der Arbeitsendlage nach außen, also weg vom Zentralrahmen 12, aus dem ersten Tragarmteil 14a ausgefahren.

Das zweite innere Tragarmteil 14b ist so weit ausgefahren, dass das am Zentralrahmen 12 angeordnete Verschiebelement 28 freigegeben ist. Dadurch kann das Verschiebelement 28 in seiner oberen Endlage zu liegen kommen. Das Verschiebelement 28 wird in der Langlochaufnahme 32 zwischen einer unteren Endlage und einer oberen Endlage in einer Verschieberichtung geführt. In dieser Lage ist der Eingriff der Formschlusselemente gelöst und der Tragarm kann von der Transportwinkellage in die Arbeitswinkellage schwenken oder umgekehrt.

In Fig. 4 ist der Zentralrahmen 12 mit einem ersten Tragarm 14 nach Fig. 3 in der Transportwinkelstellung dargestellt. Der Tragarm 16 ist zur verbesserten Sicht auf eine erfindungsgemäße Sicherungseinrichtung 100b in dieser Darstellung ebenfalls ausgeblendet.

Die analog ausgebildeten Sicherungseinrichtungen 100a, 100b umfassen auf der Seite des nicht dargestellten zweiten Tragarms 16 ein als Doppelhaken 27b ausgebildetes rahmenseitiges Formschlusselement und ein als Querrohr 26b ausgebildetes tragarmseitiges Formschlusselement. Der Doppelhaken 27b ist mit einer Arretiereinrichtung 80b verbunden, die eine Koppeleinheit in Form einer Koppelstange 30b und ein mit der Koppelstange 30a verbundenes Anschlagselement 28a aufweist.

Bei einer translatorischen Bewegung des Anschlagselements 28b um den Verfahrweg wird die Koppelstange 30b ebenfalls um einen Verfahrweg in die gleiche Richtung bewegt. Die Koppelstange 30b ist mit dem Doppelhaken 27b so verbunden, dass der Doppelhaken 27b bei einer translatorischen Bewegung der Koppelstange 30b eine rotatorische Bewegung um die Hakenschwenkachse durchführt.

Das Anschlagselement 28b ist in einer Langlochaufnahme 32b geführt. Wenn sich das Anschlagselement 28b in der unteren Endlage befindet, sind der Doppelhaken 27b und das Querrohr 27b in Eingriff miteinander. In der dargestellten Transportlage wird das Anschlagselement 27b von dem, in seiner Arretierendlage verfahrenen zweiten Tragarmteil 14b in seiner Endlage dort festgehalten, so dass der Doppelhaken 27a, 27b das Querrohr 26a, 26b umgreift, wodurch ein Öffnen des Doppelhakens 27a, 27b verhindert wird.

Das Anschlagselement 28a, befindet sich innerhalb der Langlochaufnahme 32a in seiner unteren Endlage. Das Anschlagselement 28b wird durch die Unterseite des inneren Tragarmteils 14b des ersten Tragarms 14 festgehalten bzw. während der Arretierbewegung des Tragarmteils 14b verschoben. Das Anschlagselement 28a, 28b ist durch das zweite Tragarmteil 14b bzw. das nicht dargestellte Tragarmteil 16b um den Verfahrweg von der oberen Endlage in die untere Endlage verfahren worden und hat dabei das Anschlagselement 28a, 28b der Langlochaufnahme 32a, 32b verfahren. Die Langlochaufnahme 32a, 32b kann als Begrenzung für das Anschlagselement 28a, 28b dienen.

Durch diese Bewegung des Anschlagselements ist der Doppelhaken 27a, 27b in Richtung des Tragarms 14, 16 geschwenkt worden und in das Querrohr 26a, 26b eingehakt. Die Sicherungseinrichtung 100a, 100b befindet sich in der Verriegelungsstellung.

Der Doppelhaken 27a wurde mit dem Querrohr 26a in Eingriff gebracht, so dass der erste Tragarm 14 durch den Eingriff nicht mehr um die erste Schwenkachse 22, 24 in Richtung der Arbeitsstellung geschwenkt werden kann.

Die Bewegung des zweiten Tragarmteils 14b, 16b innerhalb des ersten Tragarmteils 14a, 16a führt dazu, dass die Tragarme 14, 16 eine größere Länge in der Arbeitsstellung aufweisen können und gleichzeitig in der Transportstellung eine maximal vorgegebene Höhe nicht überschreiten. Insbesondere kann, indem das innere Tragarmteil 14b, 16b durch das äußeren Tragarmteil 14a, 14b hindurchgefahren wird, die Transporthöhe nochmal ein Stück reduziert werden.

Fig. 5 zeigt eine perspektivische Ansicht des Zentralrahmens 12 mit einem ersten Tragarm 14. Der Tragarm 14 ist dabei wie in Fig. 3 ausgerichtet. Der zweite Tragarm 16 ist wie in Fig. 4 zur verbesserten Sicht ausgeblendet. Das Anschlagselement 28a, 28b befindet sich innerhalb der Langlochaufnahme 32a, 32b in der oberen Endlage. Das Anschlagselement 28a steht vom Zentralrahmen 12 in Richtung des ersten Tragarms 14 so hervor, dass das Anschlagselement 28a bereichsweise unterhalb des ersten Tragarms 14 angeordnet ist. Der Tragarm 14 befindet sich noch in der Transportwinkelstellung, wobei das zweite Tragarmteil 14b sich nicht in seiner arretierten Endlage befindet. Dies ist zum einen der Fall, bevor das zweite Tragarmteil 14b vollständig eingefahren ist, also während des Überführens von der Arbeitsstellung in die Transportstellung oder während des Überführens von der Transportstellung in die Arbeitsstellung. So erfolgt eine Freigabe des Anschlagselements 28a, 28b und damit der Formschlusselemente.

Im Bereich des Doppelhakens 27a, 27b sind zudem elastische Pufferelemente 36a, 36b angeordnet. In der Verschlussstellung werden durch die Pufferelemente 36a, 36b die Querrohre 26a, 26b in Richtung des äußeren Endes des eingegriffenen Doppelhakens 27a, 27b verspannt. Dadurch können Bewegungen des Querrohrs 26a, 26b zwischen den Doppelhaken 27a, 27b und dem Zentralrahmen 12 weitgehend unterbunden werden. Dadurch können außerdem während des Transports auch kleinere Bewegungen der Tragarme 14, 16 um ihre Schwenkachsen 22, 24 möglichst verhindert werden.

Das innere Tragarmteil 14b, 16b ist als ein Hohlprofilkörper ausgebildet. Innerhalb des Hohlraums befindet sich ein Hydraulikzylinder, der die translatorischen Bewegungen des inneren Tragarmteils 14b, 16b in Bezug auf das äußere Tragarmteil 14a, 16a durchführt.

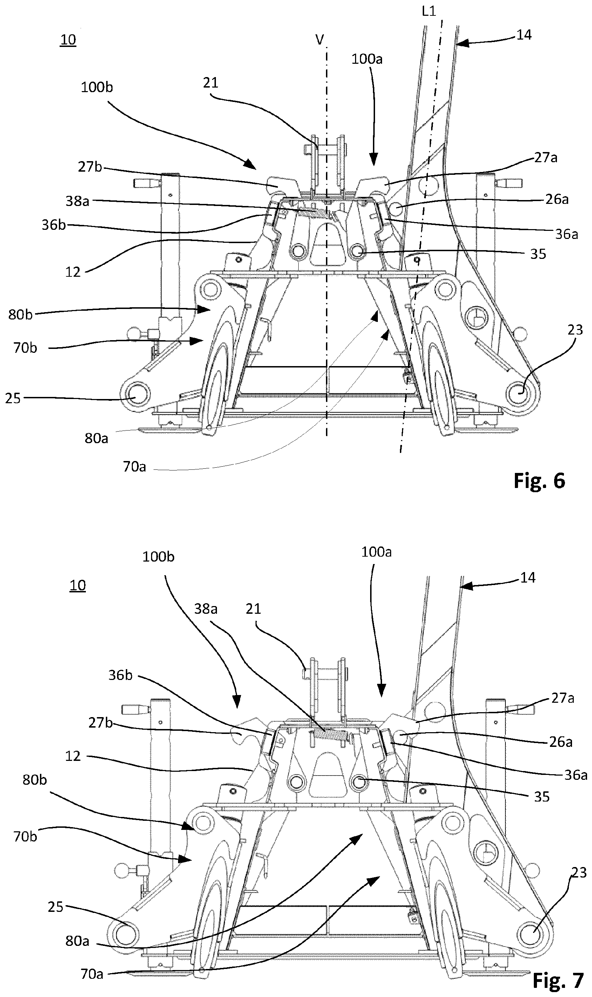

Fig. 6 zeigt eine geschnittene Ansicht der erfindungsgemäßen landwirtschaftlichen Maschine 10 mit dem ersten Tragarm 14. Der zweite Tragarm 16 ist zur besseren Sicht ausgeblendet. Der erste Tragarm 14 befindet sich in einer im Wesentlichen vertikalen Ausrichtung. Die Vertikale V und die Tragarmlängsachse L1 des ersten Tragarms 14 bilden den Transportwinkel a. Der Doppelhaken 27a und das Querrohr 26a befinden sich wie in Fig. 5 nicht in Eingriff miteinander.

Die Sicherungseinrichtung 100a, 100b weist eine Öffnungseinrichtung 60a, 60b, umfassend eine Feder 38a, auf. Die Feder 38a ist auf der einen Seite mit dem Zentralrahmen 12 und auf der anderen Seite mit dem Doppelhaken 27a, 27b des Tragarms 14, 16 verbunden. Die Feder 38a ist in Richtung der Öffnungsbewegung des Doppelhakens 27a, 27b vorgespannt, so dass der unbelastete Doppelhaken 27a, 27b in eine Position verschwenkt wird, bei der der Doppelhaken 27a, 27b und die Querrohre 26a, 26b auch in der Transportwinkellage nicht in Eingriff sind.

Solange das zweite Tragarmteil 14b, 16b nicht auf das Anschlagselement 28a, 28b drückt, wird der Doppelhaken 27a, 27b vom Querrohr 26b weggeschwenkt.

In Fig. 7 ist der Zentralrahmen 12 mit dem ersten Tragarm 14 nach Fig. 4 dargestellt. Die Sicherungseinrichtung 100a, 100b befindet sich in der Verschlussstellung. Der Doppelhaken 27a ist mit dem Querrohr 26a in Eingriff gebracht.

Die Sicherungseinrichtung 100a, 100b umfasst des Weiteren eine Arretiereinrichtung 70a, 70b. Die Arretiereinrichtung 70a, 70b umfasst dabei das Anschlagelement 28a, 28b und die Koppelstange 30a, 30b.

Durch die Bewegung des zweiten Tragarmteils 14a, das sich in der Transportstellung in der Transportendlage befindet, wurde der Doppelhaken 27a durch die Arretiereinrichtung 70a, 70b entgegen der Federvorspannung der Feder 38a, wie in Fig. 4 beschrieben, in Eingriff mit dem Querrohr 26a, 26b gebracht.

Die Feder 38a ist in der Verriegelungsstellung gespannt und wird im Rahmen der Lösebewegung, wenn das innere Tragarmteil 14b, 16b wieder in Richtung der Arbeitsendlage verschoben wird, wieder freigegeben.

Auf diese Weise können im Rahmen des Überführens des Tragarms 14, 16 von der Arbeitsstellung in die Transportstellung und umgekehrt mit Hilfe der Tragarmbewegungen die Formschlusselemente sowohl in Eingriff gebracht als auch geöffnet werden.

Durch die Integration der Öffnungs- und Verschlussbewegung der Sicherungseinrichtung 100a, 100b in die Bewegung von der Transportstellung in die Arbeitsstellung und umgekehrt wird die Handhabung des landwirtschaftlichen Gerätes 10 deutlich vereinfacht ohne den Einsatz zusätzlicher Aktoren.

### Bezugszeichenliste

- 10: landwirtschaftliches Gerät
- 12: Zentralrahmen
- 14: erster Tragarm
- 14a: erstes Tragarmteil
- 14b: zweites Tragarmteil
- 16: zweiter Tragarm
- 16a: erstes Tragarmteil
- 16b: zweites Tragarmteil
- 18: erstes Mähwerkzeug
- 20: zweites Mähwerkzeug
- 21: Kupplung
- 22: erste Schwenkachse
- 23: erstes Schwenklager
- 24: zweite Schwenkachse
- 25: zweites Schwenklager
- 26a, 26b: Querrohr
- 27a, 27b: Doppelhaken
- 28a, 28b: Anschlagselement
- 30a, 30b: Koppelstange
- 32a, 32b: Langlochaufnahme
- 36a, 36b: Pufferelement
- 38a: Feder
- 70a,70b: Arretiereinrichtung
- 80a,80b: Öffnungseinrichtung
- 100a, 100b: Sicherungseinrichtung
- L1, L2: Tragarmlängsachse
- V: Vertikalachse

## Patentansprüche

1. Landwirtschaftliches Gerät, umfassend einen Zentralrahmen mit einer Koppeleinheit für einen Traktor, zumindest einen Tragarm (14, 16), der ein Arbeitsmittel (18, 20) trägt, wobei der zumindest eine Tragarm (14, 16) schwenkbar um eine Schwenkachse (22, 24) am Zentralrahmen (12) angebunden ist, wobei der zumindest eine Tragarm (14,16) in einer Arbeitsstellung in einer Arbeitswinkellage im Wesentlichen horizontal ausgerichtet ist und in einer Transportstellung in einer Transportwinkellage im Wesentlichen vertikal ausgerichtet ist und wobei zur Sicherung des zumindest einen Tragarms (14, 16) in der Transportstellung eine Sicherungseinrichtung (100a,100b) vorgesehen ist, wobei die Sicherungseinrichtung (100a, 100b) zwei Formschlusselemente (26a, 27a; 26b, 27b) umfasst, nämlich ein zentralrahmenseitiges Formschlusselement (27a, 27b) und ein tragarmseitiges Formschlusselement (26a, 26b), wobei die Formschlusselemente (26a, 27a; 26b, 27b) durch eine relative Schließbewegung in Eingriff bringbar sind, wenn sich der Tragarm (14, 16) in der Transportwinkellage befindet, und durch eine, insbesondere zur relativen Schließbewegung entgegengesetzte, relative Öffnungsbewegung aus dem Eingriff wieder lösbar sind, wobei die Formschlusselemente (26a, 27a; 26b, 27b) so angeordnet sind, dass durch eine Lösebewegung des Tragarms (14, 16) relativ zum Zentralrahmen (12) die Formschlusselemente (26a, 27a; 26b, 27b) die relative Öffnungsbewegung ausführen und dass durch eine Arretierbewegung des Tragarms (14, 16) relativ zum Zentralrahmen (12) die Formschlusselemente (26a, 27a; 26b, 27b) die relative Schließbewegung ausführen, **dadurch gekennzeichnet, dass** der Tragarm (14, 16) zweiteilig ausgebildet ist und zumindest ein erstes Tragarmteil (14a, 16a) und ein zweites Tragarmteil (14b, 16b) aufweist, wobei das erste Tragarmteil (14a, 16a) schwenkbar mit dem Zentralrahmen (12) verbunden ist, und das zweite Tragarmteil (14b, 16b) relativ zum ersten Tragarmteil (14a, 14b) um einen Auszugsweg verschiebbar ist, wobei die Öffnungs- und / oder Arretierbewegung durch die Verschiebung des zweiten Tragarmteils (14b, 16b) erfolgt.

2. Landwirtschaftliches Gerät nach Anspruch 1, **dadurch gekennzeichnet, dass** die Sicherungseinrichtung (100a, 100b) eine Öffnungseinrichtung (80a, 80b) aufweist, die mit dem zentralrahmenseitigen Formschlusselement (27a, 27b) und / oder tragarmseitigen Formschlusselement (26a, 26b) verbunden ist, wobei die Öffnungseinrichtung (80a, 80b) die Lösebewegung des Tragarms (14, 16) in eine zu dieser unterschiedlichen relativen Öffnungsbewegung des verbundenen Formschlusselements (27a, 27b) wandelt.

3. Landwirtschaftliches Gerät nach Anspruch 1 oder 2, **dadurch gekennzeichnet, dass** die Öffnungseinrichtung (80a, 80b) zumindest eine Feder (38a) umfasst, die das tragrahmenseitige Formschlusselement und / oder zentralrahmenseitige Formschlusselement (27a, 27b) so vorspannt, dass es sich in Richtung der relativen Öffnungsbewegung bewegt.

4. Landwirtschaftliches Gerät nach einem der vorangehenden Ansprüche, **dadurch gekennzeichnet, dass** die Öffnungseinrichtung (80a, 80b) ein Öffnungskoppelelement (28a, 30a, 30b) umfasst, das durch die Lösebewegung des Tragarms um einen Öffnungsverfahrweg von einer Ausgangslage in eine Öffnungskoppelelementendlage verschoben wird, wobei das Öffnungskoppelelement ein Anschlagselement (28a, 28b) aufweist, das mit einer Anschlagsfläche des Tragarms (14, 16) zusammenwirkt.

5. Landwirtschaftliches Gerät nach einem der vorangehenden Ansprüche, **dadurch gekennzeichnet, dass** die Sicherungseinrichtung (100a, 100b) eine mit dem zentralrahmenseitigen Formschlusselement (27a, 27b) und / oder dem tragarmseitigen Formschlusselement (26a, 26b) verbundene Arretiereinrichtung (70a, 70b) umfasst, die die Arretierbewegung des Tragarms (14, 16) in eine zu dieser unterschiedlichen relativen Schließbewegung des verbundenen Formschlusselements (27a, 27b) umwandelt.

6. Landwirtschaftliches Gerät nach Anspruch 5, **dadurch gekennzeichnet, dass** die Arretiereinrichtung (70a, 70b) ein Arretierkoppelelement (28a, 30a; 28b, 30b) umfasst, das durch die Arretierbewegung des Tragarms (14, 16) um einen Arretierverfahrweg in eine Arretierkoppelelementendlage verschoben wird, wobei das Arretierkoppelelement ein Anschlagselement (28a, 28b) aufweist, das mit einer Anschlagsfläche des Tragarms (14, 16) zusammenwirkt.

7. Landwirtschaftliches Gerät nach einem der vorangehenden Ansprüche, **dadurch gekennzeichnet, dass** die Sicherungseinrichtung (100a, 100b) eine Öffnungseinrichtung (80a, 80b) aufweist, die mit dem zentralrahmenseitigen Formschlusselement (27a, 27b) verbunden ist, und dass die Öffnungseinrichtung (80a, 80b) eine Feder (38a) umfasst, die das zentralrahmenseitige Formschlusselement (27a, 27b) in Richtung der relativen Öffnungsbewegung vorspannt, und dass die Arretiereinrichtung (70a, 70b) mit dem zentralrahmenseitigen Formschlusselement (27a, 27b) verbunden ist und die Arretiereinrichtung (70a, 70b) ein Koppelelement (30a, 30b) umfasst, das durch die Arretierbewegung des Tragarms (14, 16) verschoben wird und der Federvorspannung entgegenwirkt.

8. Landwirtschaftliches Gerät nach einem der vorangehenden Ansprüche, **dadurch gekennzeichnet, dass** zumindest die Lösebewegung und die Arretierbewegung des Tragarms (14, 16) eine translatorische Bewegung ist.

9. Landwirtschaftliches Gerät nach einem der vorangehenden Ansprüche, **dadurch gekennzeichnet, dass** die Lösebewegung und die Arretierbewegung in entgegengesetzte Bewegungsrichtungen wirken.

10. Landwirtschaftliches Gerät nach einem der vorangehenden Ansprüche, **dadurch gekennzeichnet, dass** das erste Tragarmteil (14a, 16a) das zweite Tragarmteil (14b, 16b) umgreift.

11. Landwirtschaftliches Gerät nach einem der vorangehenden Ansprüche, **dadurch gekennzeichnet, dass** das zweite Tragarmteil (14b, 16b) sich in der Transportstellung in einer Transportendlage gegenüber dem ersten Tragarmteil (14a, 16a) befindet und sich in der Arbeitsstellung in einer Arbeitsendlage gegenüber dem ersten Tragarmteil (14a, 16a) befindet, wobei das zweite Tragarmteil (14b, 16b) über einen Auszugsweg entlang der Tragarmlängsachse von der Transportendlage in die Arbeitsendlage verfahrbar ist, wobei die Gesamtlänge des Tragarms (14, 16) in der Transportendlage geringer ist als in der Arbeitsendlage, wobei das Verfahren des zweiten Tragarmteils (14b, 16b) in die Transportendlage die Arretierbewegung darstellt, und damit in der Transportendlage sich die Formschlusselemente (26a, 27a; 26b, 27b) in Eingriff befinden.

12. Landwirtschaftliches Gerät nach einem der vorangehenden Ansprüche, **dadurch gekennzeichnet, dass** das Verfahren des zweiten Tragarmteils (14b, 16b) von der Transportendlage in Richtung der Arbeitsendlage über einen Öffnungsweg die Öffnungsbewegung darstellt, so dass nach Verfahren des zweiten Tragarmteils (14, 16) über den Öffnungsweg die Formschlusselemente (26a, 27a; 26b, 27b) nicht in Eingriff sind.

13. Landwirtschaftliches Gerät nach einem der Ansprüche 5 bis 12, **dadurch gekennzeichnet, dass** die Arretierkoppelelementendlage der Transportendlage des Tragarms (14, 16) entspricht.

14. Landwirtschaftliches Gerät nach einem der Ansprüche 11 bis 13, **dadurch gekennzeichnet, dass** in der Transportwinkellage das erste Tragarmteil (14, 16) mit seinem unteren Ende wenigstens im Bereich der Anschlagsfläche des Arretierkoppelelements von der Transportendlage des zweiten Tragarmteils (14b, 16b) in Richtung des Arretierverfahrwegs zumindest mit dem Arretierverfahrweg beabstandet ausgebildet ist.

15. Landwirtschaftliches Gerät nach einem der vorangehenden Ansprüche, **dadurch gekennzeichnet, dass** die Sicherungseinrichtung (100a, 100b) eine mit dem zentralrahmenseitigen Formschlusselement (27a, 27b) oder tragarmseitigen Formschlusselement (26a, 26b) verbundene Öffnungseinrichtung (80a, 80b) aufweist, die die Lösebewegung des Tragarms (14, 16) in eine zu dieser unterschiedlichen relativen Öffnungsbewegung des verbundenen Formschlusselements (27a, 27b) wandelt, wobei die Öffnungseinrichtung ein Öffnungskoppelelement (30a, 30b) umfasst, das durch die Lösebewegung des Tragarms (14, 16) um einen Öffnungsverfahrweg von einer Ausgangslage in eine Öffnungskoppelelementendlage verschoben wird, wobei das Öffnungskoppelelement ein Anschlagselement (28a, 28b) aufweist, das mit einer Anschlagsfläche des Tragarms (14, 16) zusammenwirkt.

16. Landwirtschaftliches Gerät nach einem der vorangehenden Ansprüche, **dadurch gekennzeichnet, dass** die Sicherungseinrichtung (100a, 100b) eine mit dem zentralrahmenseitigen Formschlusselement (27a, 27b) oder tragarmseitigen Formschlusselement verbundene Arretiereinrichtung (80a, 80b) aufweist, die die Arretierbewegung des Tragarms (14, 16) in eine zu dieser unterschiedlichen relativen Schließbewegung des verbundenen Formschlusselements (27a, 27b) wandelt, wobei die Arretiereinrichtung (70a, 70b) ein Arretierkoppelelement umfasst, das durch die Arretierbewegung des Tragarms um einen Arretierverfahrweg verschoben wird, insbesondere ein Anschlagselement für den Tragarm (14, 16) aufweist, wobei der Tragarm (14, 16) eine Anschlagsfläche aufweist, und wobei das Arretierkoppelelement (30a, 30b) ein Justierelement (38a, 38b) zur Anpassung des Arretierverfahrwegs auf die Transportendlage aufweist.

## Claims

1. Agricultural implement, comprising a central frame with a coupling unit for a tractor, at least one support arm (14, 16) which carries a working tool (18, 20), wherein the at least one support arm (14, 16) is attached to the central frame (12) so that it can swivel about a swivel axis (22, 24), wherein, in a working position, the at least one support arm (14, 16) is aligned substantially horizontally in a working angular position thereof, and, in a transport position, is aligned substantially vertically in a transport angular position thereof, and wherein a securing device (100a, 100b) is provided for securing the at least one support arm (14, 16) in the transport position thereof, wherein the securing device (100a, 100b) comprises two positive-locking elements (26a, 27a; 26b, 27b), i.e. a positive-locking element (27a, 27b) on the central frame side and a positive-locking element (26a, 26b) on the support arm side, wherein the positive-locking elements (26a, 27a; 26b, 27b) can be brought into engagement by a relative closing movement when the support arm (14, 16) is in its transport angular position, and can be released from their mutual engagement again by a relative opening movement, in particular opposite to the relative closing movement, wherein the positive-locking elements (26a, 27a; 26b, 27b) are arranged in such a way that a release movement of the support arm (14, 16) relative to the central frame (12) causes the positive-locking elements (26a, 27a; 26b, 27b) to perform the relative opening movement, and that a locking movement of the support arm (14, 16) relative to the central frame (12) causes the positive-locking elements (26a, 27a; 26b, 27b) to perform the relative closing movement, **characterized in that** the support arm (14, 16) is of a two-part design and has at least a first support arm part (14a, 16a) and a second support arm part (14b, 16b), with the first support arm part (14a, 16a) being pivotally connected to the central frame (12), and the second support arm part (14b, 16b) being displaceable relative to the first support arm part (14a, 14b) by an extension distance, with the opening and/or locking movements being achieved by moving the second support arm part (14b, 16b).

2. Agricultural implement according to claim 1, **characterized in that** the securing device (100a, 100b) has an opening device (80a, 80b) which is connected to the positive-locking element (27a, 27b) on the central frame side and/or to the positive-locking element (26a, 26b) on the support arm side, with the opening device (80a, 80b) converting the release movement of the support arm (14, 16) into a relative opening movement of the connected positive-locking element (27a, 27b), which latter movement differs from the release movement.

3. Agricultural implement according to any one of claims 1 or 2 above, **characterized in that** the opening device (80a, 80b) comprises at least one spring (38a) which biases the positive-locking element on the support frame side and/or the positive-locking element (27a, 27b) on the central frame side such that it moves in the direction of the relative opening movement.

4. Agricultural implement according to any one of the preceding claims, **characterized in that** the opening device (80a, 80b) comprises an opening coupling element (28a, 30a, 30b) which is displaced by the release movement of the support arm from an initial position into an end position of the opening coupling element by an opening travel, with the opening coupling element having a stop element (28a, 28b) that interacts with a stop surface of the support arm (14, 16).

5. Agricultural implement according to any one of the preceding claims, **characterized in that** the securing device (100a, 100b) comprises a locking device (70a, 70b) that is connected to the positive-locking element (27a, 27b) on the central frame side and/or to the positive-locking element (26a, 26b) on the support arm side, which locking device (70a, 70b) converts the locking movement of the support arm (14, 16) into a relative closing movement of the connected positive-locking element (27a, 27b), which latter movement differs from the locking movement.

6. Agricultural implement according to claim 5, **characterized in that** the locking device (70a, 70b) comprises a locking coupling element (28a, 30a; 28b, 30b) which is displaced by the locking movement of the support arm (14, 16) by a locking travel distance into an end position of the locking coupling element, with the locking coupling element having a stop element (28a, 28b) that interacts with a stop surface of the support arm (14, 16).

7. Agricultural implement according to any one of the preceding claims, **characterized in that** the securing device (100a, 100b) has an opening device (80a, 80b) that is connected to the positive-locking element (27a, 27b) on the central frame side, and **in that** the opening device (80a, 80b) comprises a spring (38a) which biases the positive-locking element (27a, 27b) on the central frame side in the direction of the relative opening movement, and **in that** the locking device (70a, 70b) is connected to the positive-locking element (27a, 27b) on the central frame side and the locking device (70a, 70b) comprises a coupling element (30a, 30b) that is displaced by the locking movement of the support arm (14, 16) and counteracts the spring bias.

8. Agricultural implement according to any one of the preceding claims, **characterized in that** at least the release movement and the locking movement of the support arm (14, 16) is a translational movement.

9. Agricultural implement according to any one of the preceding claims, **characterized in that** the release movement and the locking movement act in opposite movement directions.

10. Agricultural implement according to any one of the preceding claims, **characterized in that** the first support arm part (14a, 16a) engages around the second support arm part (14b, 16b).

11. Agricultural implement according to any one of the preceding claims, **characterized in that** in the transport position, the second support arm part (14b, 16b) is located in a transport end position relative to the first support arm part (14a, 16a) and, in the working position, it is located in a working end position relative to the first support arm part (14a, 16a), with the second support arm part (14b, 16b) being adapted to move over an extension distance along the longitudinal axis of the support arm from the transport end position into the working end position, with the overall length of the support arm (14, 16) being less in the transport end position than in the working end position, with the movement of the second support arm part (14b, 16b) into the transport end position constituting the locking movement, which results in the positive-locking elements (26a, 27a; 26b, 27b) being engaged with each other in the transport end position.

12. Agricultural implement according to any one of the preceding claims, **characterized in that** the movement of the second support arm part (14b, 16b) from the transport end position in the direction of the working end position along an opening path constitutes the opening movement, with the result that, after moving the second support arm part (14, 16) along the opening path, the positive-locking elements (26a, 27a; 26b, 27b) are not engaged with each other.

13. Agricultural implement according to any one of claims 5 to 12 above, **characterized in that** the end position of the locking coupling element corresponds to the transport end position of the support arm (14, 16).

14. Agricultural implement according to any one of claims 11 to 13 above, **characterized in that,** in the transport angular position, the lower end of the first support arm part (14, 16) is spaced from the transport end position of the second support arm part (14b, 16b) in the direction of the locking travel by at least the locking travel, at least in the region of the stop surface of the locking coupling element.

15. Agricultural implement according to any one of the preceding claims, **characterized in that** the securing device (100a, 100b) has an opening device (80a, 80b) that is connected to the positive-locking element (27a, 27b) on the central frame side or to the positive-locking element (26a, 26b) on the support arm side, which opening device (80a, 80b) converts the release movement of the support arm (14, 16) into a relative opening movement of the connected positive-locking element (27a, 27b), which latter movement is different from the release movement, wherein the opening device comprises an opening coupling element (30a, 30b) which is displaced by the release movement of the support arm (14, 16) by an opening travel distance from an initial position into an end position of the opening coupling element, wherein the opening coupling element has a stop element (28a, 28b) that interacts with a stop surface of the support arm (14, 16).

16. Agricultural implement according to any one of the preceding claims, **characterized in that** the securing device (100a, 100b) has a locking device (80a, 80b) which is connected to the positive-locking element (27a, 27b) on the central frame side or to the positive-locking element on the support arm side and which converts the locking movement of the support arm (14, 16) into a relative closing movement of the connected positive-locking element (27a, 27b), which latter movement is different from the locking movement, wherein the locking device (70a, 70b) comprises a locking coupling element which is displaced by the locking movement of the support arm by a locking travel, in particular has a stop element for the support arm (14, 16), wherein the support arm (14, 16) has a stop surface, and wherein the locking coupling element (30a, 30b) has an adjusting member (38a, 38b) which is used for adapting the locking travel to the transport end position.

## Revendications

1. Appareil agricole, comprenant un cadre central avec une unité d'accouplement pour un tracteur, au moins un bras de support (14, 16) qui porte un moyen de travail (18, 20), dans lequel l'au moins un bras de support (14, 16) est fixé au cadre central (12) de manière à pouvoir pivoter autour d'un axe de pivotement (22, 24), dans lequel l'au moins un bras de support (14, 16) dans une position de travail dans une situation angulaire de travail est orienté sensiblement horizontalement et dans une position de transport dans une situation angulaire de transport est orienté sensiblement verticalement et dans lequel pour le blocage de l'au moins un bras de support (14, 16) dans la position de transport un dispositif de blocage (100a, 100b) est prévu, dans lequel le dispositif de blocage (100a, 100b) comprend deux éléments de liaison par complémentarité de formes (26a, 27a ; 26b, 27b), à savoir un élément de liaison par complémentarité de formes (27a, 27b) côté cadre central et un élément de liaison par complémentarité de formes (26a, 26b) côté bras de support, dans lequel les éléments de liaison par complémentarité de formes (26a, 27a ; 26b, 27b) peuvent être amenés en prise par un mouvement de fermeture relatif lorsque le bras de support (14, 16) se trouve dans la situation angulaire de transport, et peuvent être à nouveau libérés de la prise par un mouvement d'ouverture relatif, en particulier opposé par rapport au mouvement de fermeture relatif, dans lequel les éléments de liaison par complémentarité de formes (26a, 27a ; 26b, 27b) sont disposés de sorte que par un mouvement de libération du bras de support (14, 16) par rapport au cadre central (12) les éléments de liaison par complémentarité de formes (26a, 27a ; 26b, 27b) exécutent le mouvement d'ouverture relatif et que par un mouvement d'arrêt du bras de support (14, 16) par rapport au cadre central (12) les éléments de liaison par complémentarité de formes (26a, 27a ; 26b, 27b) exécutent le mouvement de fermeture relatif, **caractérisé en ce que** le bras de support (14, 16) est réalisé en deux parties et présente au moins une première partie de bras de support (14a, 16a) et une deuxième partie de bras de support (14b, 16b), dans lequel la première partie de bras de support (14a, 16a) est reliée de manière pivotante au cadre central (12), et la deuxième partie de bras de support (14b, 16b) peut coulisser par rapport à la première partie de bras de support (14a, 14b) d'un trajet d'extraction, dans lequel le mouvement d'ouverture et/ou d'arrêt s'effectue par le coulissement de la deuxième partie de bras de support (14b, 16b).

2. Appareil agricole selon la revendication 1, **caractérisé en ce que** le dispositif de blocage (100a, 100b) présente un dispositif d'ouverture (80a, 80b) qui est relié à l'élément de liaison par complémentarité de formes (27a, 27b) côté cadre central et/ou élément de liaison par complémentarité de formes (26a, 26b) côté bras de support, dans lequel le dispositif d'ouverture (80a, 80b) convertit le mouvement de libération du bras de support (14, 16) en un mouvement d'ouverture relatif différent de celui-ci de l'élément de liaison par complémentarité de formes (27a, 27b) relié.

3. Appareil agricole selon la revendication 1 ou 2, **caractérisé en ce que** le dispositif d'ouverture (80a, 80b) comprend au moins un ressort (38a) qui précontraint l'élément de liaison par complémentarité de formes côté cadre de support et/ou élément de liaison par complémentarité de formes (27a, 27b) côté cadre central, de sorte qu'il se meut dans la direction du mouvement d'ouverture relatif.

4. Appareil agricole selon l'une quelconque des revendications précédentes, **caractérisé en ce que** le dispositif d'ouverture (80a, 80b) comprend un élément d'accouplement d'ouverture (28a, 30a, 30b), qui est amené à coulisser par le mouvement de libération du bras de support d'un parcours de déplacement d'ouverture à partir d'une situation de départ dans une situation finale d'élément d'accouplement d'ouverture, dans lequel l'élément d'accouplement d'ouverture présente un élément de butée (28a, 28b) qui coopère avec une surface de butée du bras de support (14, 16).

5. Appareil agricole selon l'une quelconque des revendications précédentes, **caractérisé en ce que** le dispositif de blocage (100a, 100b) comprend un dispositif d'arrêt (70a, 70b) relié à l'élément de liaison par complémentarité de formes (27a, 27b) côté cadre central et/ou l'élément de liaison par complémentarité de formes (26a, 26b) côté bras de support, qui convertit le mouvement d'arrêt du bras de support (14, 16) en un mouvement de fermeture relatif différent de celui-ci de l'élément de liaison par complémentarité de formes (27a, 27b) relié.

6. Appareil agricole selon la revendication 5, **caractérisé en ce que** le dispositif d'arrêt (70a, 70b) comprend un élément d'accouplement d'arrêt (28a, 30a ; 28b, 30b) qui est amené à coulisser par le mouvement d'arrêt du bras de support (14, 16) d'un trajet de déplacement d'arrêt dans une situation finale d'élément d'accouplement d'arrêt, dans lequel l'élément d'accouplement d'arrêt présente un élément de butée (28a, 28b) qui coopère avec une surface de butée du bras de support (14, 16).

7. Appareil agricole selon l'une quelconque des revendications précédentes, **caractérisé en ce que** le dispositif de blocage (100a, 100b) présente un dispositif d'ouverture (80a, 80b) qui est relié à l'élément de liaison par complémentarité de formes (27a, 27b) côté cadre central, et que le dispositif d'ouverture (80a, 80b) comprend un ressort (38a) qui précontraint l'élément de liaison par complémentarité de formes (27a, 27b) côté cadre central dans la direction du mouvement d'ouverture relatif, et que le dispositif d'arrêt (70a, 70b) est relié à l'élément de liaison par complémentarité de formes (27a, 27b) côté cadre central et le dispositif d'arrêt (70a, 70b) comprend un élément d'accouplement (30a, 30b) qui est amené à coulisser par le mouvement d'arrêt du bras de support (14, 16) et agit à l'encontre de la précontrainte de ressort.

8. Appareil agricole selon l'une quelconque des revendications précédentes, **caractérisé en ce qu'**au moins le mouvement de libération et le mouvement d'arrêt du bras de support (14, 16) est un mouvement de translation.

9. Appareil agricole selon l'une quelconque des revendications précédentes, **caractérisé en ce que** le mouvement de libération et le mouvement d'arrêt agissent dans des directions de mouvement opposées.

10. Appareil agricole selon l'une quelconque des revendications précédentes, **caractérisé en ce que** la première partie de bras de support (14a, 16a) entoure la deuxième partie de bras de support (14b, 16b).

11. Appareil agricole selon l'une quelconque des revendications précédentes, **caractérisé en ce que** la deuxième partie de bras de support (14b, 16b) dans la position de transport dans une situation finale de transport se trouve en face de la première partie de bras de support (14a, 16a) et dans la position de travail dans une situation finale de travail se trouve en face de la première partie de bras de support (14a, 16a), dans lequel la deuxième partie de bras de support (14b, 16b) est déplaçable sur un trajet d'extraction le long de l'axe longitudinal de bras de support à partir de la situation finale de transport dans la situation finale de travail, dans lequel la longueur totale du bras de support (14, 16) dans la situation finale de transport est plus petite que dans la situation finale de travail, dans lequel le déplacement de la deuxième partie de bras de support (14b, 16b) dans la situation finale de transport représente le mouvement d'arrêt, et ainsi dans la situation finale de transport les éléments de liaison par complémentarité de formes (26a, 27a ; 26b, 27b) se trouvent en prise.

12. Appareil agricole selon l'une quelconque des revendications précédentes, **caractérisé en ce que** le déplacement de la deuxième partie de bras de support (14b, 16b) à partir de la situation finale de transport dans la direction de la situation finale de travail sur un trajet d'ouverture représente le mouvement d'ouverture, de sorte qu'après le déplacement de la deuxième partie de bras de support (14, 16) sur le trajet d'ouverture les éléments de liaison par complémentarité de formes (26a, 27a ; 26b, 27b) ne sont pas en prise.

13. Appareil agricole selon l'une quelconque des revendications 5 à 12, **caractérisé en ce que** la situation finale d'élément d'accouplement d'arrêt correspond à la situation finale de transport du bras de support (14, 16).

14. Appareil agricole selon l'une quelconque des revendications 11 à 13, **caractérisé en ce que** dans la situation angulaire de transport la première partie de bras de support (14, 16) avec son extrémité inférieure au moins dans la zone de la surface de butée de l'élément d'accouplement d'arrêt est réalisée à une certaine distance de la situation finale de transport de la deuxième partie de bras de support (14b, 16b) dans la direction du trajet de déplacement d'arrêt au moins avec le trajet de déplacement d'arrêt.

15. Appareil agricole selon l'une quelconque des revendications précédentes, **caractérisé en ce que** le dispositif de blocage (100a, 100b) présente un dispositif d'ouverture (80a, 80b) relié à l'élément de liaison par complémentarité de formes (27a, 27b) côté cadre central ou élément de liaison par complémentarité de formes (26a, 26b) côté bras de support, qui convertit le mouvement de libération du bras de support (14, 16) en un mouvement d'ouverture relatif différent de celui-ci de l'élément de liaison par complémentarité de formes (27a, 27b) relié, dans lequel le dispositif d'ouverture comprend un élément d'accouplement d'ouverture (30a, 30b) qui est amené à coulisser par le mouvement de libération du bras de support (14, 16) d'un parcours de déplacement d'ouverture à partir d'une situation de départ dans une situation finale d'élément d'accouplement d'ouverture, dans lequel l'élément d'accouplement d'ouverture présente un élément de butée (28a, 28b) qui coopère avec une surface de butée du bras de support (14, 16).

16. Appareil agricole selon l'une quelconque des revendications précédentes, **caractérisé en ce que** le dispositif de blocage (100a, 100b) présente un dispositif d'arrêt (80a, 80b) relié à l'élément de liaison par complémentarité de formes (27a, 27b) côté cadre central ou l'élément de liaison par complémentarité de formes côté bras de support, qui convertit le mouvement d'arrêt du bras de support (14, 16) en un mouvement de fermeture relatif différent de celui-ci de l'élément de liaison par complémentarité de formes (27a, 27b) relié, dans lequel le dispositif d'arrêt (70a, 70b) comprend un élément d'accouplement d'arrêt qui est déplacé par le mouvement d'arrêt du bras de support d'un trajet de déplacement d'arrêt, en particulier présente un élément de butée pour le bras de support (14, 16), dans lequel le bras de support (14, 16) présente une surface de butée, et dans lequel l'élément d'accouplement d'arrêt (30a, 30b) présente un élément d'ajustement (38a, 38b) pour l'adaptation du trajet de déplacement d'arrêt à la situation finale de transport.
